Europäisches Patentamt

European Patent Office

Office européen des brevets

(19)

(11) Veröffentlichungsnummer: **0 302 235 B1**

(12) ## EUROPÄISCHE PATENTSCHRIFT

(45) Veröffentlichungstag der Patentschrift: **11.11.92**

(51) Int. Cl.⁵: **C23C 4/06**

(21) Anmeldenummer: **88110586.0**

(22) Anmeldetag: **02.07.88**

(54) **Pulverförmiger metallhaltiger Werkstoff und Verfahren zum Herstellen von Schutzschichten an Rohren für Vorwärmer und Ekonomiser.**

(30) Priorität: **08.07.87 DE 3722533**

(43) Veröffentlichungstag der Anmeldung:
**08.02.89 Patentblatt 89/06**

(45) Bekanntmachung des Hinweises auf die
Patenterteilung:
**11.11.92 Patentblatt 92/46**

(84) Benannte Vertragsstaaten:
**AT BE CH DE ES FR GB IT LI NL SE**

(56) Entgegenhaltungen:
**EP-A- 0 081 170**
**WO-A-86/06757**
**GB-A- 2 095 700**
**US-A- 4 361 604**

**PATENT ABSTRACTS OF JAPAN, Band 5, Nr. 58 (C-51)[730], 21. April 1981; & JP-A-56 9361 (SHIN NIPPON SEITETSU K.K.) 30-01-1981**

**PATENT ABSTRACTS OF JAPAN, Band 8, Nr. 11 (C-205)[1448], 18. Januar 1984; & JP-A-58 177 453 (SUMITOMO KINZOKU KOGYO K.K.) 18-10-1983**

(73) Patentinhaber: **Castolin S.A.**
**Postfach 360**
**CH-1001 Lausanne-St. Sulpice(CH)**

(72) Erfinder: **Steine, Hans-Theo**
**Route de la Plaine 15**
**CH-1022 Chavannes/Lausanne(CH)**
Erfinder: **Wasserman, Christopher**
**Eden Golf 107**
**CH-1000 Lausanne 25(CH)**

(74) Vertreter: **Hiebsch, Gerhard F., Dipl.-Ing.**
**Erzbergerstrasse 5A Postfach 464**
**W-7700 Singen 1(DE)**

EP 0 302 235 B1

**Beschreibung**

Die Erfindung betrifft Verfahren zum Herstellen von Schutzschichten an Rohren für Vorwärmer und Ekonomiser in Großfeuerungsanlagen, die in einem Temperaturbereich unter 400°C eingesetzt sind.

In Großfeuerungsanlagen -- beispielsweise in thermischen Kraftwerken, Müllverbrennungsanlagen od. dgl. -- treten an den Rohrbündeln der Vorwärmer und Ekonomiser ein mehr oder weniger starker Korrosionsangriff sowie ein hoher Erosionsverschleiß durch Rauchgase auf. Letzterer entsteht durch die hohen Anteile an Flugasche, die sich in der Hauptsache aus $Al_2O_3$, $SiO_2$, $Fe_2O_3$ und $CaO$ zusammensetzt.

Im Hinblick auf den starken Verschleiß sind die Betreiber solcher Anlagen gezwungen, eingesetzte Rohre in einem bestimmten Zyklus gegen neue auszutauschen. Um diese relativ hohen Kosten und die Stillstandzeiten herabzusetzen, wurde bereits versucht, die Rohre durch Halbschalen aus Stahl zu schützen, die an der dem Angriff ausgesetzten Seite angeschraubt oder angeschweißt werden.

Durch JP-A-58-177453 wurde ein Boilerrohr für hohe Temperaturen aus Edelstahl mit 14 bis 20 % Cr vorgeschlagen, auf das als Korrosionsschutz eine Nickellegierung bestimmter Zusammensetzung in einer Dicke von 100 bis 300 $\mu$m aufgespritzt und diese Schicht einer Hochfrequenznacherhitzung unterzogen wird. Die Nickellegierung soll 20 bis 25 % Cr, 1 bis 6 % Al und 0,5 bis 4,5 % Si enthalten und bei 1.250 bis 1.550°C nachbehandelt werden.

Da nun Versuche, Rohre des eingangs erwähnten Einsatzgebietes mit Legierungen unmittelbar zu beschichten, erfolglos blieben, sowie die verwendeten Legierungen nicht beständig gegen Erosion waren und sich ablösten, hat sich der Erfinder das Ziel gesetzt, die Standzeiten von Rohren oder anderen angegriffenen Teilen in derartigen Kesselanlagen od. dgl. ihre Korrosionsbeständigkeit sowie den Erosionswiderstand gegen Angriffe durch Rauchgase durch neuartige Verfahren der eingangs genannten Art zu verbessern.

Zur Lösung dieser Aufgabe fuhren die Lehren der unabhängigen Patentansprüche 1-3.

So wird ein pulverförmiger Werkstoff für die Beschichtung aus einer Fe-Basis-Legierung auf dem Weg des thermischen Spritzens aufgetragen, der Cr 15 % bis 35 %, Mn 0.05 % bis 5 %, C 0.01 % bis 3 %, Si 0.1 % bis 3 %, Mo 0.1 % bis 8 %, Al 2 % bis 15 % -- insbesondere 3 % bis 15 % -- Rest Fe enthält.

Günstig ist dazu ein pulverförmiger Werkstoff aus einer Fe-Basis-Legierung mit Cr 15 % bis 30 %, Mn 0.05 % bis 2 %, C 0.1 % bis 2 %, Si 0.2 % bis 2 %, Mo 0.5 % bis 5 %, Al 3 % bis 13 %, Rest Fe.

Im Rahmen der Erfindung liegt aber auch das thermische Spritzen eines pulverförmigen Werkstoffes für die Beschichtung aus einer Ni-Basis-Legierung mit:

| | | |
|----|------------------------|------------------------|
| Cr | 5 % bis 15 %, | |
| C | 0,3 % oder unter 0,3 %, | bevorzugt unter 0,2 %, |
| Mo | 2 % bis 10 %, | bevorzugt 3 % bis 8 %, |
| Al | 5 % bis 15 %, | bevorzugt 8 % bis 12 %, |
| Si | 0,1 % bis 1,5 %, | bevorzugt 0,2 % bis 1 %, |
| Fe | 5 % bis 15 %, | bevorzugt 5 % bis 10 %, |
| Rest Nickel. | | |

Eine besonders günstige Ni-Basis-Legierung für das thermische Auftragen zeichnet sich durch folgende Bestandteile aus:

| | | |
|----|-----------------|-------------------------|
| C | <0,3 % | bevorzugt unter 0,2 %, |
| Mo | 10 % bis 25 %, | bevorzugt 15 % bis 24 %, |
| Si | 0,5 % bis 3 %, | bevorzugt 1 % bis 2,5 %, |
| Fe | 10 % bis 25 %, | bevorzugt 15 % bis 24 % |
| W | 0 % bis 6 %, | bevorzugt 2 % bis 6 % |
| Ti | 5 % bis 15 %, | bevorzugt 8 % bis 15 %. |
| Rest Nickel, oder | | |

| Cr | 0 % bis 15 %, |
| C | unter 0,3 %, |
| Mo | 2 % bis 25 %, |
| Al | 0,1 % bis 13 %, |
| Si | 0,2 % bis 3 %, |
| Fe | 5 % bis 25 %, |
| W | unter 7 %, |
| Ti | 0 % bis 15 %, |
| Rest Nickel. | |

Die Werkstoffe bieten eine höhere Energieaufnahme des Partikels bei der Flammenpassage an. Der Auftrag des -- vor allem eine asphärische Kornform aufweisenden -- Werkstoffes -- der bevorzugten Kornverteilung zwischen 37 $\mu$m und 150 $\mu$m -- erfolgt vorteilhaft mit einem autogenen Flammspritzgerät oder einem Plasmaspritzgerät.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1      einen Steilrohrkessel im Querschnitt;

Fig. 2      eine schematisierte Wiedergabe des Steilrohrkessels.

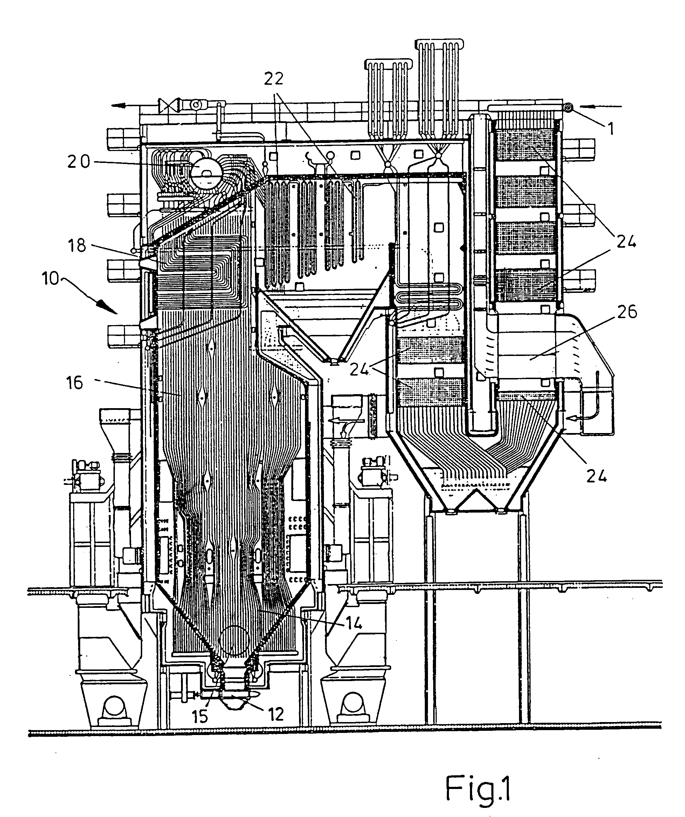

Ein Steilrohrkessel 10 für Kohlefeuerung weist über einem Entascher 12 einen Feuerraum 14 mit Brenner 15 und eine Vielzahl von Wasserrohren 16 an den Kesselwänden 17 auf. Mit 18 sind Schottenüberhitzer unterhalb einer Kesseltrommel 20 bezeichnet, mit 22 Berührungsüberhitzer und mit 24 Speisewasservorwärmer oder Ekonomiser. Zwischen den Speisewasservorwärmern 24 -- in welchen mit den Abgasen der Kesselanlage das Speisewasser unter Einsparung von Brennstoff und Verringerung der Wärmespannungen im Kessel vorgewärmt wird -- sind an der rechten Flanke der Fig. 1 Luftvorwärmer 26 angeordnet. In jenen Ueberhitzern 18, 22 wird Sattdampf ohne Drucksteigerung auf eine höhere Temperatur gebracht, d.h. überhitzt.

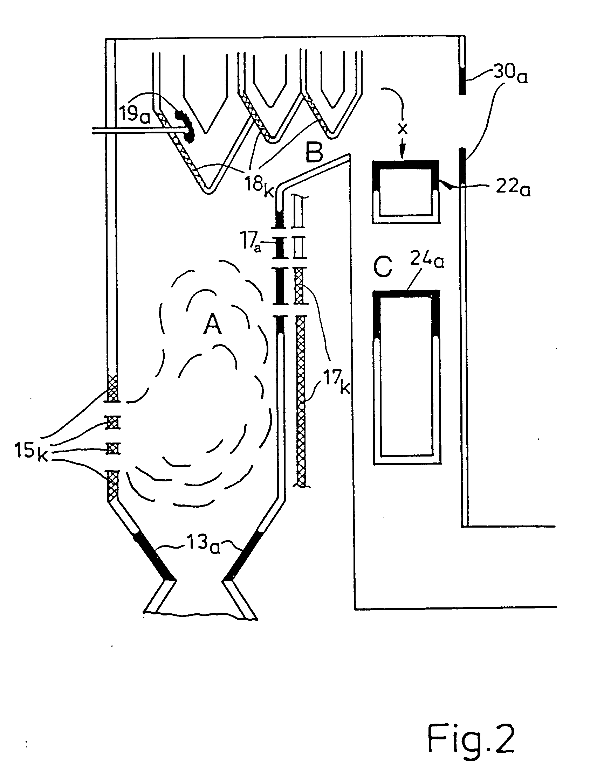

Die Fig. 2 zeigt typische Belastungszonen für Korrosion (Index k) und Erosion (Index a). Korrosionen sind vornehmlich am Brenner $15_k$, an der Kesselwand $17_k$ und an den Schottenüberhitzern $18_k$ zu finden, die Erosionserscheinungen hingegen unterhalb des Feuerraums 14 bei $13_a$, an der Kesselwand bei $17_a$, am Rußbläser $19_a$ des Schottenüberhitzers 18, an den in Strömungsrichtung x ersten Berührungsüberhitzern $22_a$ sowie am Vorwärmer $24_a$. Zudem gibt es Erosionen an einer oberen Zugangsöffnung $30_a$.

Die Temperaturen in dem korrosions- und oxidationsbelasteten Feuerraum liegen etwa zwischen 1000° und 1200° C (Zone A), in Zone B bei etwa 700° C sowie im Bereich der Vorwärmer 24, 26 bei etwa 400° C (Zone C).

Die erfindungsgemäßen pulverförmigen Werkstoffe werden auf Rohre der Vorwärmer 26 auf dem Wege des thermischen Spritzens aufgetragen.

Nachfolgend werden einige Ausführungsbeispiele mit erfindungswesentlichen Merkmalen beschrieben.

**Beispiel 1:**

Eine in der Zeichnung nicht gezeigte Halbschale aus Stahl, die an einem Rohr eines bei 350° C in einem Kohlenkraftwerk arbeitenden Vorwärmers als Verschleiß-Schutz angebracht war, mußte wegen hohen Erosionsverschleißes nach einer Standzeit von sechs Monaten ausgebaut werden. Nach der Abnahme der Halbschale wurde auf der dem Verschleiß ausgesetzten Seite die Oberfläche des Rohres vor Ort, also ohne Ausbau, durch Strahlen mit Korund vorbereitet und anschließend mit der Legierung nach Anspruch 4 0,6 mm stark durch autogenes Flammspritzen mit einer Spritzdistanz von 150 cm beschichtet.

Nach einer weiteren Standzeit wurde das beschichtete Rohr geprüft und dabei festgestellt, daß die Schicht noch eine Schichtstärke von 0,4 mm aufwies. Die an dem Nebenrohr zur gleicher Zeit angebrachte Halbschale aus Stahl Zeigte einen Verschleiß von 0,6 mm, d.h. die aufgespritzte Schicht wies im Vergleich zu der Halbschale eine wesentlich bessere Verschleißbeständigkeit auf, wodurch die Standzeit für das beschichtete Rohr um das Doppelte bis zur nächsten Beschichtung verlängert wurde.

**Beispiel 2:**

An einem weiteren Rohr des in Beispiel 1 beschriebenen Vorwärmers wurde auch die Legierung nach Anspruch 2 mit der gleichen Schichtstärke und dem gleichen Verfahren getestet. Auch bei dieser Legierung wurde im Vergleich zu der Halbschale eine dreifach verbesserte Standzeit festgestellt.

**Beispiel 3:**

Am gleichen Vorwärmer wie in Beispiel 1 wurde noch ein weiteres Rohr mit der Legierung nach Anspruch 6 unter den gleichen Bedingungen mit der gleichen Schichtstärke getestet. Bei der Kontrolle wurde auch hier eine vierfach bessere Standzeit ermittelt.

**Patentansprüche**

1. Verfahren zum Herstellen von Schutzschichten an Rohren für Vorwärmer und Ekonomiser, die in einem Temperaturbereich unter 400° C in Großfeuerungsanlagen eingesetzt sind,
dadurch gekennzeichnet,
daß ein pulverförmiger Werkstoff für die Beschichtung aus einer Fe-Basis-Legierung auf dem Weg des thermischen Spritzens aufgetragen wird, der enthält: Cr 15 % bis 35 %; Mn 0.05 % bis 5 %; C 0.01 % bis 3 %; Si 0.1 % bis 3 %; Mo 0.1 % bis 8 %; Al 2 % bis 15 %; Rest Fe.

2. Verfahren zum Herstellen von Schutzschichten an Rohren für Vorwärmer und Ekonomiser, die in einem Temperaturbereich unter 400° C in Großfeuerungsanlagen eingesetzt sind, dadurch gekennzeichnet, daß ein pulverförmiger Werkstoff für die Beschichtung aus einer Ni-Basis-Legierung auf dem Weg des thermischen Spritzens aufgetragen wird, der enthält: Cr 5 % bis 15 %; C 0,3 % oder unter 0,3 %; Mo 2 % bis 10 %; Al 5 % bis 15 %; Si 0,1 % bis 1,5 %; Fe 5 % bis 15 %; Rest Ni.

3. Verfahren zum Herstellen von Schutzschichten an Rohren für Vorwärmer und Ekonomiser, die in einem Temperaturbereich unter 400° C in Großfeuerungsanlagen eingesetzt sind, dadurch gekennzeichnet, daß ein pulverförmgier Werkstoff für die Beschichtung aus einer Ni-Basis-Legierung auf dem Weg des thermischen Spritzens aufgetragen wird, der enthält: C <0,3 %; Mo 10 % bis 25 %; Si 0,5 % bis 3 %; Fe 10 % bis 25 %; W 0 % bis 6 %; Ti 5 % bis 15 %; Rest Ni; oder Cr 0 % bis 15 %; C <0,3 %; Mo 2 % bis 25 %; Al 0,1 % bis 13 %; Si 0,2 % bis 3 %; Fe 5 % bis 25 %; W unter 7 %; Ti 0 % bis 15 %; Rest Ni.

4. Verfahren nach Anspruch 1, gekennzeichnet durch einen Anteil an Al zwischen 3 % und 15 %.

5. Verfahren nach Anspruch 1 oder 4, dadurch gekennzeichnet, daß der pulverförmige Werkstoff aus einer Fe-Basis-Legierung besteht mit Cr 15 % bis 30 %; Mn 0.05 % bis 2 %; C 0.1 % bis 2 %; Si 0,2 % bis 2 %; Mo 0.5 % bis 5 %; Al 3 % bis 13 %; Rest Fe.

6. Verfahren nach Anspruch 2, dadurch gekennzeichnet, daß der pulverförmige Werkstoff aus einer Ni-Basis-Legierung besteht mit Cr 5 % bis 15 %, C <0,2 %, Mo 3 % bis 8 %, Al 8 % bis 12 %; Si 0,2 % bis 1 %; Fe 5 % bis 10 %, Rest Ni.

7. Verfahren nach Anspruch 3, dadurch gekennzeichnet, daß der pulverförmige Werkstoff aus einer Ni-Basis-Legierung besteht mit C <0,2 %, Mo 15 % bis 24 %, Si 1 % bis 2,5 %, Fe 15 % bis 24 %, W 2 % bis 6 %, Ti 8 % bis 15 %, Rest Ni.

8. Verfahren nach wenigstens einem der Ansprüche 1 bis 7, gekennzeichnet durch eine Kornverteilung des pulverförmigen Werkstoffes zwischen 37 $\mu$m und 150 $\mu$m.

9. Verfahren nach wenigstens einem der Ansprüche 1 bis 8, gekennzeichnet durch eine asphärische Kornform.

**Claims**

1. Process for the production of protective layers on tubes of pre-heaters and economisers used in large-scale firing plants in a temperature range of below 400° C, characterised in that a coating of pulverulent material is applied by thermal spraying, consisting of an alloy based on Fe and containing Cr 15 % to 35 %, Mn 0.05 % to 5 %, C 0.01 % to 3 %, Si 0.1 % to 3 %, Mo 0.1 % to 8 %, Al 2 % to 15 %, with the remainder Fe.

2. Process for the production of protective layers on tubes of pre-heaters and economisers used in large-

4

scale firing plants in a temperature range of below 400°C, characterised in that a coating of pulverulent material is applied by thermal spraying, consisting of an alloy based on Ni and containing Cr 5 % to 15 %, C 0.3 % or less than 0.3 %, Mo 2 % to 10 %, Al 5 % to 15 %, Si 0.1 % to 1.5 %, Fe 5 % to 15 %, with the remainder Ni.

3. Process for the production of protective layers on tubes of pre-heaters and economisers used in large-scale firing plants in a temperature range of below 400°C, characterised in that a coating of pulverulent material is applied by thermal spraying, consisting of an alloy based on Ni and containing C < 0.3 %, Mo 10 % to 25 %, Si 0.5 % to 3 %, Fe 10 % to 25 %, W 0 % to 6 %, Ti 5 % to 15 %, with the remainder Ni, or Cr 0 % to 15 %, C < 0.3 %, Mo 2 % to 25 %, Al 0.1 % to 13 %, Si 0.2 % to 3 %, Fe 5 % to 25 %, W less than 7 %, Ti 0 % to 15 %, with the remainder Ni.

4. Process according to claim 1, characterised by an Al content of between 3 % and 15 %.

5. Process according to claim 1 or claim 4, characterised in that the pulverulent material consists of an alloy based on Fe, comprising Cr 15 % to 30 %, Mn 0.05 % to 2 %, C 0.1 % to 2 %, Si 0.2 % to 2 %, Mo 0.05 % to 5 %, Al 3 % to 13 %, with the remainder Fe.

6. Process according to claim 2, characterised in that the pulverulent material consists of an alloy based on Ni, comprising Cr 5 % to 15 %, C < 0.2 %, Mo 3 % to 8 %, Al 8 % to 12 %, Si 0.2 % to 1 %, Fe 5 % to 10 %, with the remainder Ni.

7. Process according to claim 3, characterised in that the pulverulent material consists of an alloy based on Ni, comprising C < 0.2 %, Mo 15 % to 24 %, Si 1 % to 2.5 %, Fe 15 % to 24 %, W 2 % to 6 %, Ti 8 % to 15 %, with the remainder Ni.

8. Process according to at least one of claims 1 to 7, characterised by a grain distribution for the pulverulent material of between 37 $\mu$m and 150 $\mu$m.

9. Process according to at least one of claims 1 to 8, characterised by a non-spherical grain shape.

**Revendications**

1. Procédé de réalisation de couches protectrices sur les tubes de préchauffeurs et d'économiseurs, utilisés sur l'intervalle de températures inférieur à 400°C dans les grandes chaufferies, caractérisé en ce qu'on applique par pulvérisation thermique un matériau en poudre en un alliage à base de fer et destiné au revêtement, qui contient : Cr 15 à 35 % ; Mn 0,05 à 5 % ; C 0,01 à 3 % ; Si 0,1 à 3 % ; Mo 0,1 à 8 % ; Al 2 à 15 % ; le reste étant Fe.

2. Procédé de réalisation de couches protectrices sur les tubes de préchauffeurs et d'économiseurs, utilisés sur l'intervalle de températures inférieur à 400°C dans les grandes chaufferies, caractérisé en ce qu'on applique par pulvérisation thermique un matériau en poudre en un alliage à base de fer et destiné au revêtement, qui contient : Cr 5 à 15 % ; C 0,3 ou moins de 0,3 % ; Mo 2 à 10 % ; Al 5 à 15 % ; Si 0,1 à 1,5 % ; Fe 5 à 15 % ; le reste étant Ni.

3. Procédé de réalisation de couches protectrices sur les tubes de préchauffeurs et d'économiseurs, utilisés sur l'intervalle de températures inférieur à 400°C dans les grandes chaufferies, caractérisé en ce qu'on applique par pulvérisation thermique un matériau en poudre en un alliage à base de fer et destiné au revêtement, qui contient : Cr < 0,3 % ; Mo 10 à 25 % ; Si 0,5 à 3 % ; Fe 10 à 25 % ; W 0 à 6 % ; Ti 5 à 15 % ; le reste étant Ni; ou encore Cr 0 à 15 % ; C < 0,3 % ; Mo 2 à 25 % ; Al 0,1 à 13 % ; Si 0,2 à 3 % ; Fe 5 à 25 % ; W inférieur à 7%; Ti 0 à 15 % ; le reste étant Ni.

4. Procédé selon la revendication 1, caractérisé en ce qu'il contient de 3 à 15 % de Al.

5. Procédé selon la revendication 1 ou 4, caractérisé en ce que le matériau en poudre, constitué d'un alliage à base de fer, contient Cr 15 à 30 % ; Mn 0,05 à 2 % ; C 0,1 à 2 % ; Si 0,2 à 2 % ; Mo 0,5 à 5 % ; Al 3 à 13 % ; le reste étant Fe.

**6.** Procédé selon la revendication 2, caractérisé en ce que le matériau en poudre constitué d'un alliage à base de Ni contient Cr 5 à 15 % ; C < 0,2 % ; Mo 3 à 8 % ; Al 8 à 12 % ; Si 0,2 à 1 % ; Fe 5 à 10 %, le reste étant Ni.

**7.** Procédé selon la revendication 3, caractérisé en ce que le matériau en poudre constitué d'un alliage à base de Ni contient C < 0,2 %, Mo 15 à 24 % ; Si 1 à 2,5 % ; Fe 15 à 24 % ; W 2 à 6 % ; Ti 8 à 15 % ; le reste étant Ni.

**8.** Procédé selon au moins l'une des revendications 1 à 7, caractérisé en ce que le matériau en poudre présente une répartition granulométrique de 37 à 150 $\mu$m.

**9.** Procédé selon au moins l'une des revendications 1 à 8, caractérisé par des grains de forme asphérique.

Fig.1

Fig.2